# EUROPÄISCHE PATENTSCHRIFT

(11) **EP 0 788 932 B1**
(45) Veröffentlichungstag und Bekanntmachung des Hinweises auf die Patenterteilung: **10.05.2000**
(21) Anmeldenummer: 97100990.7
(22) Anmeldetag: 23.01.1997
(51) Int. Cl.: B60R 21/13

(54) **Überrollschutz für ein Kraftfahrzeug**
Roll-over protection device for a vehicle
Dispositif d'arceau de sécurité pour un véhicule

(30) Priorität: 07.02.1996 DE 19604423
(43) Veröffentlichungstag der Anmeldung: 13.08.1997
(73) Patentinhaber: Bayerische Motoren Werke Aktiengesellschaft, 80788 München (DE)
(72) Erfinder: Heiner, Lothar, 80933 München (DE); Lömker, Jens, 32312 Lübbecke (DE)

(56) Entgegenhaltungen:
- EP-A- 0 189 819
- EP-A- 0 657 327
- WO-A-95/03952
- DE-A- 4 314 538
- US-A- 4 032 187

## Beschreibung

Die Erfindung betrifft einen Überrollschutz für ein Kraftfahrzeug.

Es ist bekannt, bei Cabriolets einen Überrollschutz in Form eines Überrollbügels vorzusehen, der bei einem Unfall und insbesondere bei einem Überschlag des Fahrzeuges eine die Insassen schützende feste Struktur bildet. Derartige Überrollbügel sind zumeist starr an der Fahrzeugkarosserie angebracht oder sie weisen einen Klappmechanismus auf, der sie aus einer abgesenkten Ruhestellung bei Bedarf in eine aktive Sicherheitsstellung hochklappt, in der der Bügel dann starr verriegelt gehalten wird.

Die starre Anordnung des Überrollbügels ist zwar aus Stabilitätsgründen erwünscht, kann aber nachteilige Auswirkungen haben, falls bei einem Unfall ein Fahrzeuginsasse mit seinem Kopf gegen den Überrollbügel prallt und sich daran verletzt.

EP-A-0 657 327 zeigt einen gattungsgemäßen Überrollbügel, mit elastischen Elementen, die jedoch lediglich dem Spielansgleich der Schenkel des Überrobügels auf den fahrhzeugfesten Aufnahmerohren dienen.

Es ist daher Aufgabe der vorliegenden Erfindung, einen Überrollschutz der eingangs genannten Art dahingehend zu verbessern, daß sein Verletzungspotential, insbesondere bezüglich Kopfaufprall, verringert wird.

Diese Aufgabe wird erfindungsgemäß durch einen Überrollschutz mit den Merkmalen des Anspruchs 1 gelöst. Vorteilhafte Ausgestaltungen der Erfindung sind in den Unteransprüchen angegeben.

Durch die verformbare Lagerung des Überrollbügels an einer fahrzeugfesten Struktur kann sich der Überrollbügel bei Einleitung einer Kraft relativ zu der festen Karosseriestruktur um eine begrenzte Wegstrecke bewegen, bevor er daran starr und fest anliegt. Dann können z. B. beim Aufprall des Kopfes eines Fahrzeuginsassen die HIC-Werte gegenüber einer nicht nachgebenden Anordnung stark gesenkt werden. Die Lagerung nimmt die in den Überrollbügel eingeleitete Energie durch Verformung auf und wirkt somit dämpfend. Eine solche Verformung kann plastisch erfolgen, so kann z. B. eine Aluminium-Wabenkonstruktion als verformbares Teil für die Lagerung verwendet werden. Damit kann eine auftretende Kraft einmalig durch Verformungsarbeit abgebaut werden. Zweckmäßigerweise wird von der Lagerung eine Relativbewegung in allen Richtungen ermöglicht, wobei eine größte Bewegungsmöglichkeit im wesentlichen in Fahrzeuglängsrichtung für den Fall des Körperaufpralls vorgesehen ist.

Besonders vorteilhaft ist eine elastisch verformbar Lagerung, die die Bewegungsenergie des Überrollbügels aufnimmt und sich anschließend bei unbelastetem Überrollbügel wieder in ihre Ausgangsstellung zurückverformen kann, um auch bei einer wiederholten Krafteinwirkung auf den Überrollbügel diesem eine begrenzt nachgebende Lagerung zu bieten.

Die Lagerung umfaßt ein Absorberelement, das verformbar und insbesondere elastisch verformbar ausgebildet ist, und das die durch einen Aufprall auf den Überrollbügel eingeleitete Bewegungsenergie durch Verformung teilweise oder ganz absorbieren kann.

Der Überrollbügel kann aus einem Rohr, einem Stab oder einer Profilkonstruktion bestehen und aus Stahl oder einem vergleichbaren festen Material hergestellt sein und sich im wesentlichen über die ganze Fahrzeugbreite erstrecken. Ebenso kann in etwa hinter jedem Sitz ein beispielsweise U-förmiger Überrollbügel vorgesehen sein, dessen beide Schenkel abwärts gerichtet in zwei am Fahrzeug fest angebrachten Aufnahmerohren aufgenommen und mittels der Absorberelemente darin gelagert sind. Die Absorberelemente halten im Normalzustand den Überrollbügel bzw. die beiden Schenkel von der Innenwand des jeweiligen Aufnahmerohres beabstandet und gestatten die oben beschriebene Verlagerung des Überrollbügels, bis sich die Schenkel an dem Aufnahmerohr und/oder in Axialrichtung an einem festen Anschlag anlegen.

Die Lagerung kann an jedem Schenkel ein oder mehrere Absorberelemente aufweisen. Das Absorberelement kann eine Federanordnung aufweisen, die den Schenkel in dem Aufnahmerohr unter Federvorspannung hält und gegen deren Kraft der Überrollbügel elastisch ausgelenkt werden kann. Andererseits kann das Absorberelement eine reversibel oder irreversibel verformbare Struktur aufweisen, z. B. eine Wabenstruktur, die eingeleitete Bewegungsenergie durch Verformung abbaut. Zweckmäßigerweise ist das Absorberelement ringförmig und ist zwischen dem Schenkel und dem Aufnahmerohr eingepaßt, wobei der Schenkel dann in einer in etwa mittigen Längsbohrung oder eingeformten Ausnehmung aufgenommen ist. Der Schenkel ist in dem Aufnahmerohr exzentrisch aufgenommen, so daß ihm in einer bevorzugten Richtung eine möglichst große Bewegungsstrecke zur Verfügung steht. Dazu ist in einer zweckmäßigen Ausgestaltung die Längsbohrung bzw. Ausnehmung in dem ringförmigen Absorberelement so exzentrisch versetzt, daß in der Einbaulage des Absorberelementes der Schenkel näher am vorderen Wandabschnitt des Aufnahmerohres (in Fahrtrichtung betrachtet) angeordnet ist.

In einer zweckmäßigen Ausgestaltung enthält das Absorberelement einen Außenring zum Anlegen an die Innenwand des Aufnahmerohres und einen Innenring zum festen Aufnehmen des Schenkels. Die beiden Ringe sind durch verformbare Stege, die das Verformungsvermögen des Absorberelementes mitbestimmen, miteinander flexibel verbunden.

Das Absorberelement ist zweckmäßigerweise aus einem elastomeren Werkstoff (z. B. Gummi oder ein elastomerer Kunststoff mit vergleichbaren Eigenschaften) hergestellt. Es kann auch mit anderen Werkstoffen wie auch mit Metall kombiniert sein, um Festigkeit und elastische Eigenschaften vorteilhaft zu vereinigen.

Ein Schenkel des Überrollbügels kann verlängert ausgebildet sein, um dem Überrollbügel die erforderliche starre Lagerung beim Anlegen an das Aufnahmerohr zu bieten. Je nach Anordnung der Absorberelemente bezüglich des Schenkels und Bewegungsmöglichkeit des Schenkels im Aufnahmerohr können unterschiedliche Verschiebe- und Verschwenkbewegungen des Überrollbügels zugelassen werden.

Zweckmäßigerweise ist eine zusätzliche Sicherung des Überrollbügels gegen Entnahme oder ungewolltes Herausziehen bei einem Überschlag vorgesehen. Diese kann als eine an einer Ausnehmung des Schenkels eingreifende Sperre oder Klinke ausgebildet sein.

Nachfolgend wird die Erfindung anhand eines Ausführungsbeispiels unter Bezugnahme auf Zeichnungen näher beschrieben. Es zeigt:
- Fig. 1: in perspektivischer Draufsicht einen erfindungsgemäßen Überrollschutz mit Überrollbügeln mit ihrer Lagerung;
- Fig. 2 a-c: in perspektivischer Draufsicht den Überrollbügel mit seiner Lagerung im Normalzustand;
- Fig. 3 a-c: in perspektivischer Draufsicht den Überrollbügel mit seiner Lagerung im ausgelenkten Zustand; und
- Fig. 4: in perspektivischer Draufsicht den in einem Fahrzeug eingebauten Überrollschutz im Normalzustand.

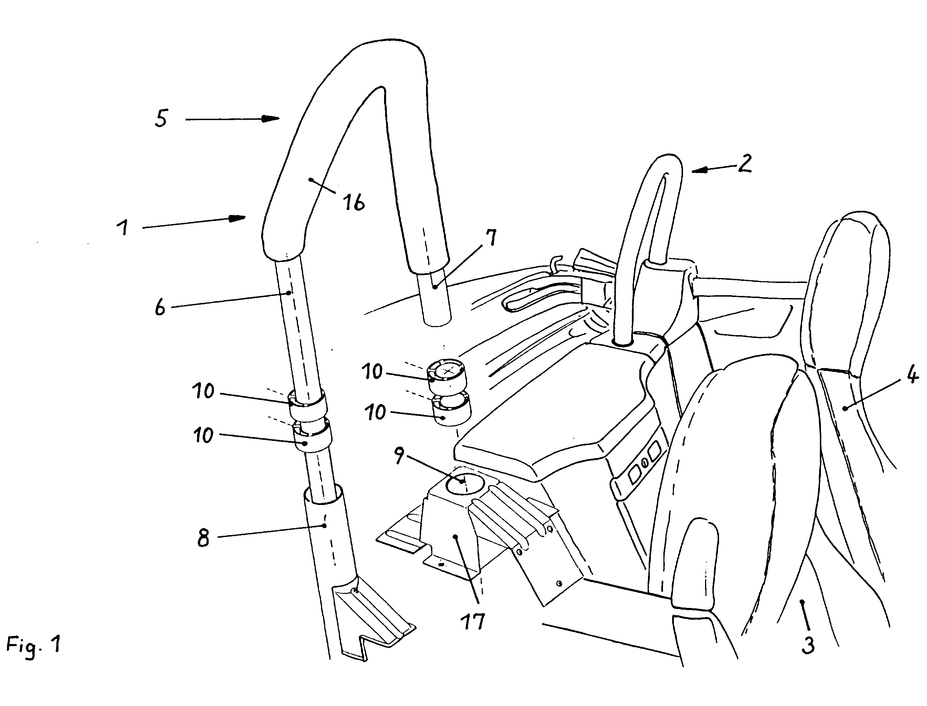

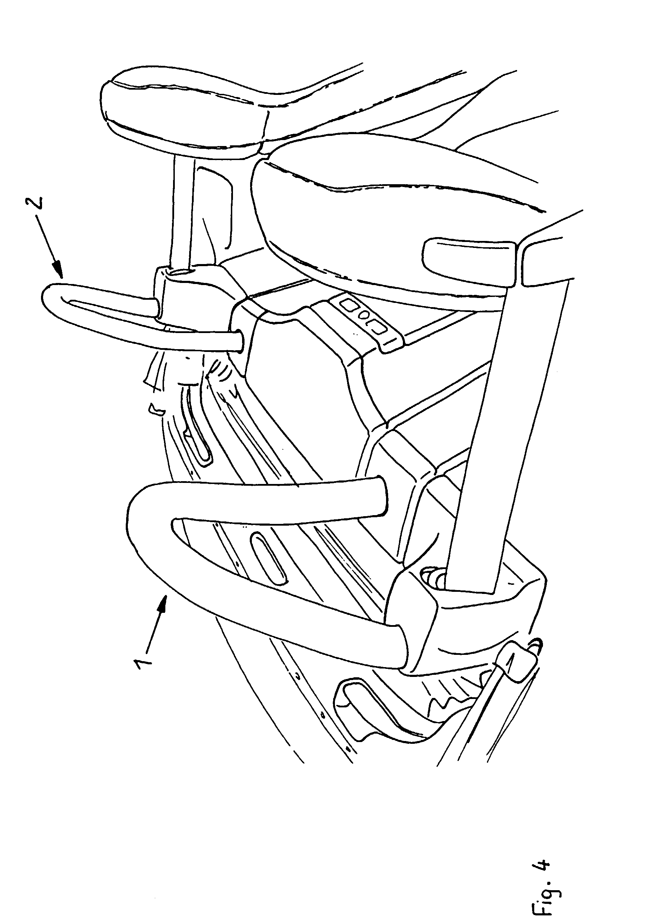

Ein erfindungsgemäßer Überrollschutz enthält zwei Überrollbügel 1, 2, die hinter den beiden Sitzen 3 bzw. 4 eines Cabriolets (siehe Fig. 1 und 4) angeordnet sind. Die beiden Überrollbügel 1, 2 sind bezüglich einer Fahrzeuglängsachse in etwa spiegelsymmetrisch angeordnet und aufgebaut, so daß die Beschreibung anhand eines der Überrollbügel (und zwar des bezüglich des Fahrzeuges rechten Überrollbügels 1, siehe Fig. 1 und 4) erfolgt.

Der Überrollbügel 1 (siehe Fig. 1) enthält zwei beabstandete, sich in seiner Einbaulage von einem Verbindungsstück 5 aus parallel abwärts erstreckende Schenkel 6, 7, wobei der fahrzeugäußere Schenkel 6 länger ist als der fahrzeuginnere Schenkel 7 und sich weiter abwärts erstreckt. Die Schenkel 6, 7 sind jeweils in einem der jeweiligen Schenkellänge entsprechenden Aufnahmerohr 8, 9 aufgenommen und gelagert. Das fahrzeuginnere Aufnahmerohr 9 ist in einem Lagerbock 17 an der Fahrzeugkarosserie enthalten. Das fahrzeugäußere Aufnahmerohr 8 steht sowohl oben wie unten über das benachbarte kürzere Aufnahmerohr 9 hinaus.

Der Innenquerschnitt bzw. Innendurchmesser der beiden Aufnahmerohre 8, 9 ist größer als der Außenquerschnitt bzw. Außendurchmesser des jeweiligen, z. B. rohr- oder stabförmigen, biegesteifen (z. B. aus Stahl hergestellten) Schenkels 6, 7 mit vorzugsweise rundem Querschnitt, so daß diese mit Spiel zur Innenwandung der Aufnahmerohre 8, 9 aufgenommen werden können.

An jedem Schenkel 6, 7 sind zwei Absorberelemente 10 voneinander beabstandet angebracht, mit denen der Überrollbügel 1, 2 in den Aufnahmerohren 8, 9 zur Wandung beabstandet gelagert ist.

Das Absorberelement 10 ist ein ringförmiger Körper mit einer exzentrisch angeordneten Längsbohrung oder Durchgangsöffnung 11. Im dargestellten Ausführungsbeispiel weist es einen Außenring 12 und einen Innenring 13 auf, der exzentrisch im Außenring 12 angeordnet ist und über mehrere Stege 14 mit dem Außenring 12 verbunden ist, so daß mehrere Hohlräume 15 oder Längsdurchgänge zwischen Außenring 12 und Innenring 13 geschaffen sind. Das Absorberelement 10 ist aus elastomerem Werkstoff, z. B. aus Gummi, hergestellt. Der Innendurchmesser des des Innenringes 13 ist dem Außendurchmesser des zu lagernden Schenkels 6, 7 derart angepaßt, daß das Absorberelement 10 verschiebefest auf dem Schenkel 6, 7 sitzt. Zu diesem Zweck kann es auf den Schenkel 6, 7 aufgeschoben und mit einer Schraube oder mit Klebstoff am Schenkel 6, 7 fixiert sein, sowie aufgepreßt oder aufvulkanisiert sein.

Der Außendurchmesser des Absorberelementes 10 ist derart an den Innendurchmesser des Aufnahmerohres 8, 9 angepaßt, daß das Absorberelement 10 elastisch und fest in das Aufnahmerohr 8, 9 eingepaßt werden kann. Das Aufnahmerohr 8, 9 und das Absorberelement 10 können statt dem dargestellten Kreisquerschnitt auch elliptischen oder ähnlichen geeigneten Querschnitt aufweisen.

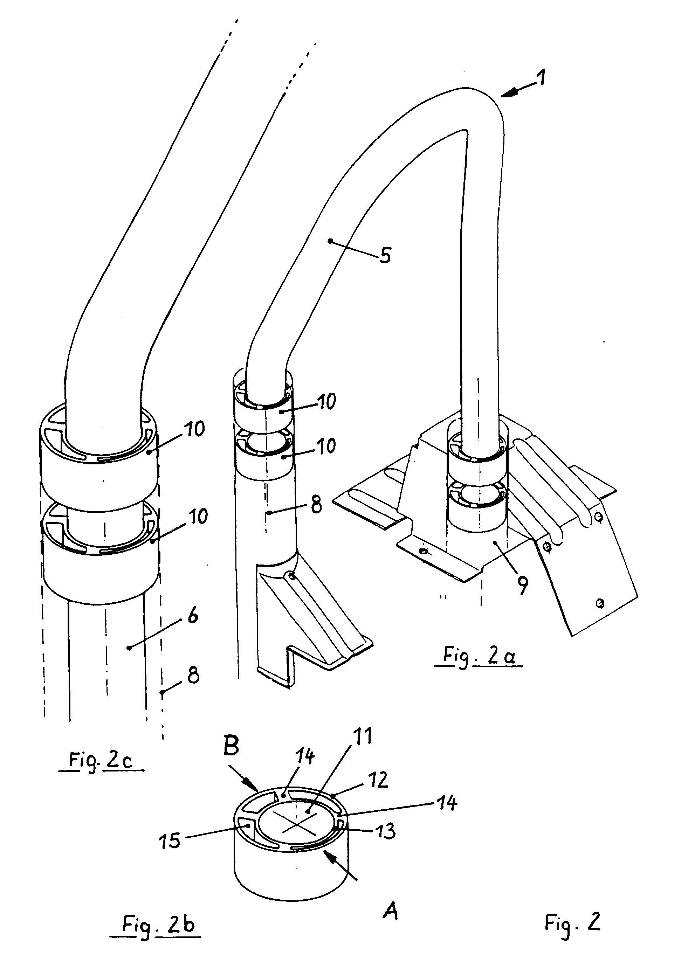

Jedes Absorberelement 10 ist derart ausgerichtet angeordnet, daß der Innenring 13 bzw. die Längsbohrung 11 exzentrisch in Fahrzeuglängsrichtung nach vorne versetzt ist. Das bedeutet, daß die Wandstärke des Absorberelementes 10 , gemessen von der Innenseite des Innenringes 13 bis zur Außenseite des Außenringes 12, in einer vertikalen Schnittebene in Fahrzeuglängsrichtung an der Vorderseite (Pfeil A in Fig. 2 b) geringer ist als an der gegenüberliegenden Rückseite (Pfeil B).

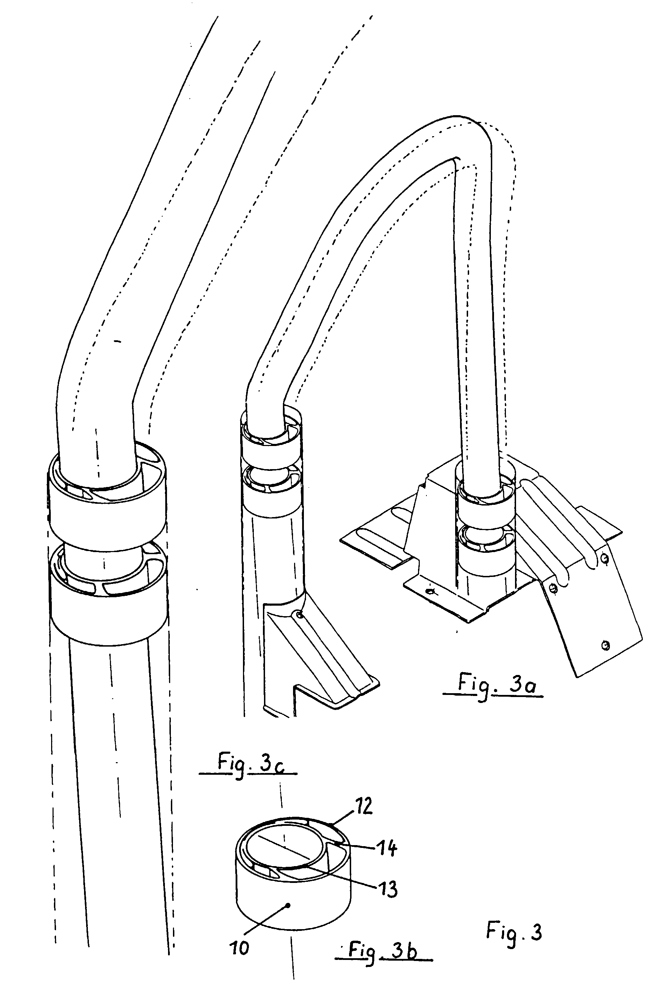

Durch die elastische Aufhängung des Innenringes 13 am Außenring 12 über die Stege 14 kann sich der Schenkel 6, 7 bei entsprechender Krafteinleitung radial oder allgemein in einer horizontalen Ebene in dem Absorberelement 10 relativ zum Außenring 12 und somit zum Aufnahmerohr 8, 9 bewegen, bis er sich an die Wandung des Aufnahmerohres 8, 9 anlegt. Gemäß der exzentrischen Anordnung des Absorberelementes 10 bzw. des Schenkels 6, 7 im Absorberelement 10 ist der Bewegungs- bzw. Verformungsweg in Fahrzeuglängsrichtung am größten. Jedoch kann sich der Schenkel 6, 7 auch seitlich bewegen, bis er am Aufnahmerohr 8, 9 anliegt. Die Bewegungsmöglichkeit wird durch die Dämpfungsfähigkeit des Werkstoffes der Stege 14, durch deren Anzahl, Größe und Verteilung bestimmt. In Abhängigkeit von der Lageranordnung (Länge, gegenseitiger Abstand und Anordnung der Absorberelemente) kann auch eine Kippbewegung des Schenkels 6, 7 im Absorberelement 10, d. h. ein Verschwenken der Längsachse des Schenkels 6, 7 und des Innenringes 13 relativ zum Außenring 12, erfolgen (siehe beispielsweise Fig. 3)

Das Absorberelement 10 kann ein Kombinationslager sein, das einen Außenring und einen Innenring aus einem harten, nichtverformbaren Werkstoff wie z. B. Metall oder Hartkunststoff aufweist, die durch elastisch verformbare Stege miteinander verbunden sind.

Bei einem Überschlag, bei dem der Überrollbügel 1, 2 das Fahrzeuggewicht abstützen muß, wird eine wesentliche Kraftkomponente in Längsrichtung der Schenkel 6, 7 (d. h. vertikal) in den Überrollbügel 1, 2 eingeleitet. Dieser wird axial um einen bestimmten Abstand, z. B. um 5 mm, bis zu einem Axialanschlag (nicht dargestellt) am Aufnahmerohr 8, 9 verschoben und stützt sich starr daran ab. Die elastischen Stege 14 können sich entsprechend dieser Axialbewegung verformen.

Eine Abdeckung umgibt die beiden Aufnahmerohre 8, 9 bzw. den Lagerbock 17 (siehe Fig. 4). Der Bereich des eingebauten Überrollbügels 1, 2, der außerhalb der beiden Aufnahmerohre 8, 9 ist (d. h. im wesentlichen das Verbindungsteil 5, das U-förmig oder ähnlich geformt sein kann, und ein oberer Abschnitt des Schenkels 7), ist mit einer Polsterung 16 versehen, die im Ausführungsbeispiel als Schaumstoffummantelung gebildet ist.

In Fig. 3 a-c ist ein in Fahrzeuglängsrichtung nach hinten ausgelenkter Überrollbügel dargestellt (strichliert ist der unausgelenkte Normalzustand dargestellt). Fig. 3b zeigt deutlich das verformte Absorberelement 10 (Schenkel nicht dargestellt), dessen Innenring 13 vom Schenkel unter Verformung der Stege 14 relativ zum Außenring 12 nach hinten verschoben worden ist.

## Patentansprüche

1. Überrollschutz für ein Kraftfahrzeug, mit zumindest einem Überrollbügel (1, 2), der mit 2 Schenkeln (6,7) an einer fahrzeugfesten Struktur mittels eine begrenzte Relativbewegung des Überrollbügels (1, 2) zur fahrzeugfesten Struktur gestattenden elastischen Elementen gelagert ist, dadurch gekennzeichnet, daß das elastische als elastich verformbares Absorberelement (10) ausgebildet ist, und daß zumindest ein Schenkel (6, 7) im Absorberelement (10) exzentrisch aufgenommen ist.

2. Überrollschutz nach Anspruch 1, dadurch gekennzeichnet, daß der Überrollbügel (1, 2) mit zwei Schenkeln (6, 7) in fahrzeugfesten Aufnahmerohren (8, 9) gelagert ist.

3. Überrollschutz nach einem der Ansprüche 1 oder 2, dadurch gekennzeichnet, daß der maximale Bewegungsweg des Schenkels (6, 7) im Absorberelement (10) in etwa in Fahrzeuglängsrichtung ausgerichtet ist.

4. Überrollschutz nach Anspruch 3, dadurch gekennzeichnet, daß in der Einbaulage des Absorberlementes (10) der Schenkel (6,7) näher am vorderen Wandabschnitt des Aufnahmerohres, in Fahrtrichtung betrachtet, angeordnet ist.

5. Überrollschutz nach einem der Ansprüche 1 bis 4, dadurch gekennzeichnet, daß das Absorberelement (10) den Schenkel (6, 7) ringförmig umgibt.

6. Überrollschutz nach einem der Ansprüche 1 bis 5, dadurch gekennzeichnet, daß das Absorberelement (10) einen Außenring (12) und einen Innenring (13) aufweist und die beiden Ringe (12, 13) mit Stegen (14) miteinander verbunden sind.

7. Überrollschutz nach einem der Ansprüche 1 bis 6, dadurch gekennzeichnet, daß das Absorberelement (10) aus Elastomerwerkstoff hergestellt ist.

8. Überrollschutz nach einem der Ansprüche 1 bis 6, dadurch gekennzeichnet, daß das Absorberelement (10) ein Elastomer-Metall-Kombinationselement ist.

9. Überrollschutz nach einem der Ansprüche 1 bis 8, dadurch gekennzeichnet, daß das Absorberelement (10) mit Schrauben am Schenkel (6, 7) oder am Aufnahmerohr (8, 9) befestigt ist.

10. Überrollschutz nach einem der Ansprüche 1 bis 8, dadurch gekennzeichnet, daß das Absorberelement (10) auf dem Schenkel (6, 7) aufvulkanisiert ist.

11. Überrollschutz nach einem der Ansprüche 1 bis 10, dadurch gekennzeichnet, daß der Überrollbügel (1, 2) einen verlängerten Schenkel (6) aufweist.

12. Überrollschutz nach einem der Ansprüche 1 bis 11, dadurch gekennzeichnet, daß der freie Abschnitt (5) des Überrollbügels (1, 2) eine Polsterung (16) aufweist.

13. Überrollschutz nach Anspruch 12, dadurch gekennzeichnet, daß die Polsterung (16) ein den Überrollbügel (1, 2) ummantelnder Schaumstoff ist.

14. Überrollschutz nach einem der Ansprüche 1 bis 13, dadurch gekennzeichnet, daß die Lagerung des Überrollbügels (1, 2) an jedem Schenkel (6, 7) zwei voneinander beabstandete Absorberelemente (10) beinhaltet.

15. Überrollschutz nach einem der Ansprüche 1 bis 14, dadurch gekennzeichnet, daß die Lagerung bzw. das Absorberelement (10) eine Axialbewegung der beiden Schenkel (6, 7) bis zu einem Axialanschlag am Aufnahmerohr (8, 9) zuläßt.

16. Überrollschutz nach einem der Ansprüche 1 bis 15, dadurch gekennzeichnet, daß zwei Überrollbügel (1, 2) an einem Cabriolet in etwa hinter den beiden Sitzen (3, 4) angeordnet sind.

17. Überrollschutz nach einem der Ansprüche 1 bis 16, dadurch gekennzeichnet, daß eine Entnahmesicherung für den Überrollbügel (1, 2) vorgesehen ist.

18. Überrollschutz nach Anspruch 17, dadurch gekennzeichnet, daß die Entnahmesicherung eine mechanische Sperre ist.

## Claims

1. A roll-over protective structure for a motor vehicle comprising at least one roll bar (1, 2) having two arms (6, 7) mounted on a structure fastened to the vehicle via elastic elements allowing limited movement of the roll bar (1, 2) relative to the structure fastened to the vehicle, characterised in that the elastic element is in the form of an elastically deformable absorber element (10) and at least one arm (6, 7) is eccentrically received in the absorber element (10).

2. A roll-over protective structure according to claim 1, characterised in that the roll bar (1, 2) has two arms (6, 7) mounted in receiving tubes (8, 9) fastened to the vehicle.

3. A roll-over protective structure according to claim 1 or claim 2, characterised in that the maximum travel path of the arm (6, 7) in the absorber element (10) is approximately in the longitudinal direction of the vehicle.

4. A roll-over protective structure according to claim 3, characterised in that when the absorber element (10) is in the installed position, the arm (6, 7) is disposed nearer the front wall portion of the receiving tube, considered in the direction of travel.

5. A roll-over protective structure according to any of claims 1 to 4, characterised in that the absorber element (10) surrounds the arm (6, 7) in a circle.

6. A roll-over protective structure according to any of claims 1 to 5, characterised in that the absorber element (10) has an outer ring (12) and an inner ring (13), and the two rings (12, 13) are connected to one another via webs (14).

7. A roll-over protective structure according to any of claims 1 to 6, characterised in that the absorber element (10) is made of elastomeric material.

8. A roll-over protective structure according to any of claims 1 to 6, characterised in that the absorber element (10) is an elastomer-metal combined element.

9. A roll-over protective structure according to any of claims 1 to 8, characterised in that the absorber element (10) is screwed to the arm (6, 7) or to the receiving tube (8, 9).

10. A roll-over protective structure according to any of claims 1 to 8, characterised in that the absorber element (10) is vulcanised on to the arm (6, 7).

11. A roll-over protective structure according to any of claims 1 to 10, characterised in that the roll bar (1, 2) has a long arm (6).

12. A roll-over protective structure according to any of claims 1 to 11, characterised in that the free portion (5) of the roll bar (1, 2) comprises padding (16).

13. A roll-over protective structure according to claim 12, characterised in that the padding (16) is a foam substance encasing the roll bar (1, 2).

14. A roll-over protective structure according to any of claims 1 to 13, characterised in that the mounting of the roll bar (1, 2) comprises two spaced-apart absorber elements (10) on each arm (6, 7).

15. A roll-over protective structure according to any of claims 1 to 14, characterised in that the mounting or the absorber element (10) permits axial motion of the two arms (6, 7) up to an axial abutment on the receiving tube (8, 9).

16. A roll-over protective structure according to any of claims 1 to 15, characterised in that two roll bars (1, 2) are disposed in a convertible, approximately behind the two seats (3, 4).

17. A roll-over protective structure according to any of claims 1 to 16, characterised in that means are provided for preventing removal of the roll bar (1, 2).

18. A roll-over protective structure according to claim 17, characterised in that the means are in the form of a mechanical stop.

## Revendications

1. Dispositif de protection de retournement pour un véhicule comprenant au moins un arceau (1, 2) à deux branches (6, 7) monté sur une structure solidaire du véhicule par l'intermédiaire d'éléments élastiques permettant un mouvement relatif limité de l'arceau (1, 2) par rapport à la structure solidaire du véhicule,
caractérisé en ce que
- l'élément élastique est un élément absorbant (10) déformable élastiquement et
- au moins une branche (6, 7) est logée de manière excentrée dans l'élément absorbant (10).

2. Dispositif de protection selon la revendication 1,
caractérisé en ce que
l'arceau (1, 2) est monté dans des tubes de réception (8, 9) solidaires du véhicule par deux branches (6, 7).

3. Dispositif de protection selon l'une des revendications 1 ou 2,
caractérisé en ce que
la course maximale de la branche (6, 7) dans l'élément absorbant (10) est dirigée sensiblement dans la direction longitudinale du véhicule.

4. Dispositif de protection selon la revendication 3,
caractérisé en ce qu'
en position de montage de l'élément absorbant (10), la branche (6, 7) se trouve près du segment de paroi avant du tube de réception selon le sens de circulation du véhicule.

5. Dispositif de protection selon l'une des revendications 1 à 4,
caractérisé en ce que
l'élément absorbant (10) entoure les branches (6, 7) de façon annulaire.

6. Dispositif de protection selon l'une des revendications 1 à 5,
caractérisé en ce que
l'élément absorbant (10) comprend un anneau extérieur (12) et un anneau intérieur (13) ces deux anneaux (12, 13) étant reliés par des branches (14).

7. Dispositif de protection selon l'une des revendications 1 à 6,
caractérisé en ce que
l'élément absorbant (10) est un élastomère.

8. Dispositif de protection selon l'une des revendications 1 à 6,
caractérisé en ce que
l'élément absorbant (10) est un élément combiné élastomère-métal.

9. Dispositif de protection selon l'une des revendications 1 à 8,
caractérisé en ce que
l'élément absorbant (10) est fixé par des vis à la branche (6, 7) ou aux tubes de réception (8, 9).

10. Dispositif de protection selon l'une des revendications 1 à 8,
caractérisé en ce que
l'élément absorbant (10) est vulcanisé sur la branche (6, 7).

11. Dispositif de protection selon l'une des revendications 1 à 10,
caractérisé en ce que
l'arceau (1, 2) présente une branche (6), allongée.

12. Dispositif de protection selon l'une des revendications 1 à 11,
caractérisé en ce que
le segment libre (5) de l'arceau (1, 2) comporte un rembourrage (16).

13. Dispositif de protection selon la revendication 12,
caractérisé en ce que
le rembourrage (16) est une mousse formant une gaine autour de l'arceau de protection (1, 2).

14. Dispositif de protection selon l'une des revendications 1 à 13,
caractérisé en ce que
le montage de l'arceau (1, 2) au niveau de chaque branche (6, 7) est assuré par deux éléments absorbants (10) écartés l'un de l'autre.

15. Dispositif de protection selon l'une des revendications 1 à 14,
caractérisé en ce que
le montage ou l'élément absorbant (10) autorise un mouvement axial des deux branches (6, 7) jusqu'à une butée axiale par rapport aux tubes de réception (8, 9).

16. Dispositif de protection selon l'une des revendications 1 à 15,
caractérisé par
deux arceaux (1, 2) prévus sensiblement derrière les deux sièges (3, 4) d'un cabriolet.

17. Dispositif de protection selon l'une des revendications 1 à 16,
caractérisé par
un dispositif de protection contre l'enlèvement des arceaux (1, 2).

18. Dispositif de protection selon la revendication 17,
caractérisé en ce que
le moyen de protection contre l'enlèvement est un verrou mécanique.
